# EUROPEAN PATENT APPLICATION

(11) **EP 4 435 321 A1**
(43) Date of publication of application: **25.09.2024**
(21) Application number: 22894514.3
(22) Date of filing: 10.10.2022
(51) Int. Cl.: F21V 19/00, F21V 8/00, F21V 11/06, F21V 5/04

(54) **LAMP**

(30) Priority: 18.11.2021 CN 202122870701 U; 18.11.2021 CN 202111371986
(71) Applicant: Suzhou Opple Lighting Co., Ltd., Suzhou, Jiangsu 215211 (CN); Opple Lighting Co,. Ltd., Shanghai 201203 (CN)
(72) Inventor: LIU, Haisheng, Suzhou, Jiangsu 215211 (CN); WANG, Yaohai, Suzhou, Jiangsu 215211 (CN); GAO, Minghao, Suzhou, Jiangsu 215211 (CN); LI, Huajian, Suzhou, Jiangsu 215211 (CN); LI, Yang, Suzhou, Jiangsu 215211 (CN); LIU, Chaobo, Suzhou, Jiangsu 215211 (CN)
(74) Representative: dompatent von Kreisler Selting Werner - Partnerschaft von Patent- und Rechtsanwälten mbB
(86) International application number: PCT/CN2022/124474
(87) International publication number: WO 2023/087976

(57) **Abstract**

Disclosed is a lamp relating to the technical field of lighting electrical appliances. A lamp includes: a first light-emitting component including a blue light emitter and a light guide member, the blue light emitter is disposed adjacent to the light guide member, so that a blue light emitted by the blue light emitter enters the light guide member to display a light effect of blue sky; a second light-emitting component including a sunlight emitter and an optical element, the sunlight emitter is disposed adjacent to the optical element, so that the sunlight emitted by the sunlight emitter is transmitted through the optical element to form a sun spot; a gratings disposed on a side of the optical element away from the sunlight emitter and configured to intercept the sun spot transmitted through the optical element to give a sun spot with predetermined shape. The present application can alleviate the problem that the current blue-sky lamps fail to really reflect an effect of blue sky.

## Description

### TECHINICAL FIELD

The present application relates to the technical field of lighting electrical appliance, especially to a lamp.

### BACKGROUND

Lamps are divided into lighting lamps and ambient lights. Among them, the lighting lamps are mainly used to provide a lighting function, and the ambient lights are mainly used to render an environmental ambience. To render the environmental ambience, some places also use blue sky lights as ambient lights, by which people can observe scenes similar to the blue sky.

Currently, some blue-sky lamps are mainly composed of a light source and a light panel with blue sky pattern, which can emit blue light into the environment to create a blue sky-like environment when the light source is lit. However, such blue-sky lamps do not have good sense of reality of blue-sky effect so that persons cannot experience an indoor blue-sky effect well.

### SUMMARY OF THE INVENTION

An object of the embodiments of the present application is to provide a lamp which can solve the problem that the current blue-sky lamp has poor sense of reality on reflecting the blue-sky effect.

To solve the above technical problem, the present application provides the following solutions.

An embodiment of the present application provides a lamp comprising: a first light-emitting component comprising a blue light emitter and a light guide member, the blue light emitter is disposed adjacent to the light guide member so that a blue light emitted by the blue light emitter enters the light guide member to present a light effect of blue sky; a second light-emitting component comprising a sunlight emitter and an optical element, the sunlight emitter is disposed adjacent to the optical element so that a sunlight emitted by the sunlight emitter is transmitted by the optical element to form a sunlight spot; and a gratings disposed on a side of the optical element away from the sunlight emitter, and configured to intercept the sunlight spot to form a sunlight spot with a predetermined shape.

In the embodiments of the present application, the blue light emitter emits a blue light to the light guide member so that the light guide member shows a sky blue color, and thus presents a light effect of blue sky; and the sunlight emitter emits a sunlight to the optical element so that the sunlight is transmitted by the optical element to form a sunlight spot, which is intercepted by the gratings to form a sunlight spot with a predetermined shape; and meanwhile the sunlight, when passing through the gratings, will form a shadow around the sunlight spot, which is similar to a window shadow of a sunlight shining on a window. In this way, people can observe both the light effect of the blue sky and the shadow effect of sunlight in the environment, so that the blue-sky effect can be achieved through the contrast of the shadow effect, which can increase the sense of reality, thereby enhancing the visual enjoyment.

### BRIEF DESCRIPTION OF THE DRAWINGS

FIG. 1 is a schematic view of overall structure of a lamp disclosed in an embodiment of the present application;
FIG. 2 is an exploded schematic view of the lamp disclosed in the embodiment of the present application;
FIG. 3 is a schematic left view of the lamp disclosed in the embodiment of the present application;
FIG. 4 is a first cross-sectional schematic view of the lamp disclosed in the embodiment of the present application;
FIG. 5 is a partial enlarged view of the position A in FIG. 4;
FIG. 6 is a second cross-sectional schematic view of the lamp disclosed in the embodiment of the present application;
FIG. 7 is a partial enlarged view of the position B in FIG. 6;
FIG. 8 is a schematic structural view of the lamp body disclosed in the embodiment of the present application;
FIG. 9 is a cross-sectional schematic view of a first form of lamp body disclosed in the embodiment of the present application;
FIG. 10 is a cross-sectional schematic view of a second form of lamp body disclosed in the embodiment of the present application;
FIG. 11 is an optical path diagram of the first light-emitting component disclosed in the embodiment of the present application;
FIG. 12 is an optical path diagram of the second light-emitting component disclosed in the embodiment of the present application, in which a) is an optical path diagram of the second light-emitting component in a horizontal plane, and b) is an optical path diagram of the second light-emitting component in a vertical plane;
FIG. 13 is a schematic diagram of the first form of lamp projecting a sunlight spot onto a wall disclosed in the embodiment of the present application;
FIG. 14 is a schematic diagram of the sunlight spot on the wall in FIG. 13;
FIG. 15 is a schematic diagram of the second form of lamp projecting a sunlight spot on a wall disclosed in the embodiment of the present application;
FIG. 16 is a schematic diagram of the sunlight spot on the wall in FIG. 15.

### Description of Reference Signs:

100 - lamp body; 110 - first installation structure; 111 - first groove; 112 - channel; 113 - through hole; 114 - first plate; 115 - second plate; 116 - partition; 120 - second installation structure; 121 - second groove; 130 - connection structure; 140 - first barrier; 150 - second barrier;
200 - first light-emitting component; 210 - blue light emitter; 220 - light guide member;
221 - light incident surface; 222 - light exiting surface;
300 - second light-emitting component; 310 - sunlight emitter; 320 - optical element;
400 - wall;
500 - sunlight spot;
M - gratings; N - intermediate plane.

### DETAILED DESCRIPTION

Hereinafter the technical solutions in the embodiments of the present invention are clearly and completely described with reference to the accompanying drawings in the embodiments of the present invention. It is apparent that the described embodiments are some, but not all, of the embodiments of the present application. All other embodiments obtained by one of ordinary skill in the art based on the embodiments of the present application without paying creative labor fall within the protection scope of the present application.
a) The terms "first", "second" or the like in the description and claims of the present application are used to distinguish similar objects, rather than describe a specific order or sequence. It is to be understood that the data so used are interchangeable as appropriate so that the embodiments of the present application can be implemented in orders other than those illustrated or described herein. Moreover, the objects distinguished by "first," "second," etc. generally belong to the same class, and the quantity of the objects are not limited. For example, there may be one or more first objects. In addition, "and/or" in the description and claims refers to at least one of objects associated thereby, and the character "/" generally indicates that the associated objects before and after this character has an "or" relationship.

Hereinafter the embodiments of the present application are described in detail by specific examples and their application scenarios with reference to the accompanying drawings.

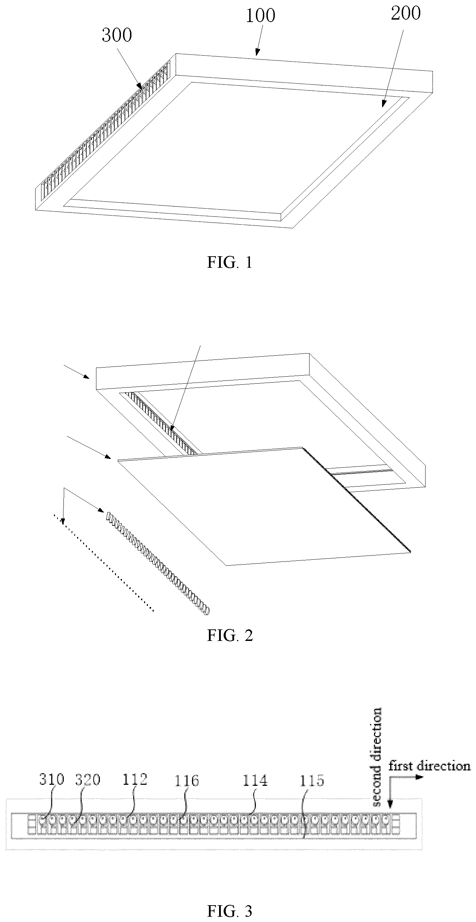

Referring to FIGS. 1 to 16, an embodiment of the present application discloses a lamp including a first light-emitting component 200 and a second light-emitting component 300.

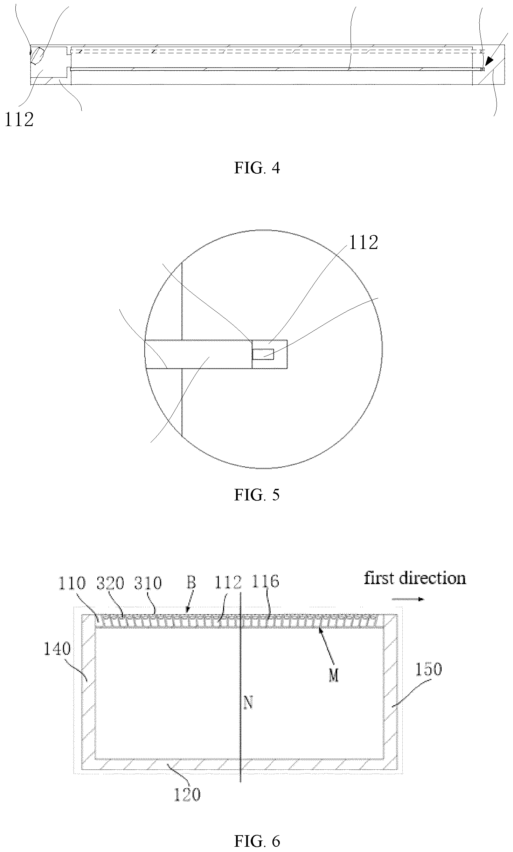

Among them, the first light-emitting component 200 is configured to emit a blue light, optionally, the blue light has a spectrum range of 400 nm to 500 nm. As shown in FIGS. 4 and 5, the first light-emitting component 200 comprises a blue light emitter 210 and a light guide member 220. Optionally, the light guide member 220 can has a flat structure comprising a light incident surface 221 facing the blue light emitter 210 and a light exiting surface 222 perpendicular to the light incident surface 221 as a main surface of the light guide member 220. By the blue light emitter 210, a blue light can be emitted. The blue light passes through the light incident surface 221 to enter the light guide member 220, and then is propagated in the light guide member 220 (such as, undergoing a total reflection, etc.). During the propagation of the blue light in the light guide member 220, its propagation direction is changed due to the effect of an internal structure (such as, diffused particles) of the light guide member 220, so that the total reflection condition is destroyed, and then the blue light can be emitted out of the light-emitting surface 222, and thus the light guide member 220 can present a blue glow.

To enable the blue light to enter the light guide member 220, in some embodiments, the blue light emitter 210 is disposed adjacent to the light guide member 220. Optionally, the blue light emitter 210 can be disposed opposite to an end of the light guide member 220. The blue light emitter 210 can be either attached to the light incident surface 221 of the light guide member 220, or spaced apart by a gap. In this way, when the blue light emitter 210 is lit, the blue light enters the light guide member 220 from the light incident surface 221 of the light guide member 220 and is emitted out from the light exiting surface 222 of the light guide member 220, so that the light guide member 220 presents a blue glow and exhibits a light effect of blue sky. In this case, one can have the feeling of watching the blue sky when watching the light guide member 220 so that people can enjoy a comfortable and open environment.

Optionally, the blue light emitter 210 can be a blue lamp strip, a blue lamp bead, or the like, which can emit a blue light. Of course, the blue light emitter 210 can also be other components capable of emitting a blue light, which is not limited in the embodiments of the present application.

The second light-emitting component 300 is used to emit sunlight, optionally, the sunlight has a spectrum range of 380 nm to 780 nm. As shown in FIGS. 3 and 4, the second light-emitting component 300 comprises a sunlight emitter 310 and an optical element 320. The sunlight emitter 310 can emit sunlight, and the optical element 320 can limit the sunlight emitted by the sunlight emitter 310 so that the divergent sunlight can show up as a sunlight beam after passing through the optical element 320.

To enable the sunlight to transmit through the optical element 320, in some embodiments, the sunlight emitter 310 is disposed adjacent to the optical element 320. Optionally, the sunlight emitter 310 can be disposed opposite to the optical element 320. The sunlight emitter 310 can be attached to the light incident end surface of the optical element 320, or spaced apart by a distance. In this way, when the sunlight emitter 310 is lit, a divergent sunlight can be emitted outwards, which shows up as a sunlight beam after transmitted by the optical element 320 so that the sunlight can be emitted in a predetermined direction. When the sunlight beam shines on a panel or wall 400, a sun spot 500 can be presented on the panel or wall 400 so that the environment shows warmer and provides persons with comfortable enjoyment.

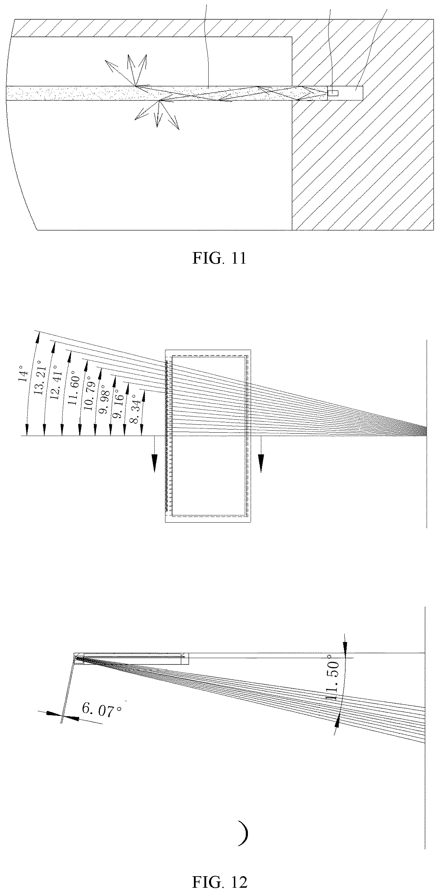

Referring to FIG. 4 and b) in FIG. 12, in some embodiments, an end surface of the sunlight emitter 310 opposite to the optical element 320 and an end surface of the optical element 320 opposite to the sunlight emitter 310 form an angle ranging from 6° to 7°, including 6°, 6.07°, 6.1°, 6.3°, 6.5°, 6.8°, 7°, or the like. In a more specific embodiment, the angle is 6.07° to meet the requirement of actual working conditions.

In some embodiments, an end surface of the optical element 320 opposite to the sunlight emitter 310 and a side wall of the lamp body 100 of the lamp form an angle ranging from 11° to 12°, including 11°, 11.2°, 11.4°, 11.5°, 11.7°, 11.9°, 12°, or the like. In a more specific embodiment, the angle is 11.5° to meet the requirement of actual working conditions. Here, it is to be noted that when the lamp is in the installed state, one side wall of the lamp body 100 is disposed vertically. In this case, the extending direction of the optical axis of the optical element 320 also forms an angle of 11.5° with the horizontal plane, so that the light beam transmitted by the optical element 320 gradually extends downwards to meet the requirement of actual working conditions.

Considering that the shape of the sun spot 500 formed by the sunlight passing through the optical element 320 is restricted by the optical element 320, the sun spot 500 can have the same shape as the blue area presented by the light guide member 220 only if the optical element 320 has the same shape as the light guide member 220. In this way, the shape of the light guide member 220 is restricted to an extent.

In view of the above situation, the lamp in the embodiment of the present application further comprises a gratings M, as shown in FIG. 2. The sunlight beam can be restricted by the gratings M when passing through the gratings M to present a sun spot 500 has a shape matching the gratings M. In some embodiments, the gratings M is disposed on a side of the optical element 320 away from the sunlight emitter 310, and configured to intercept the sunlight spot 500 transmitted by the optical element 320, thereby forming a predetermined shape of the sunlight spot 500.

At the same time, a shadow can be formed around the sunlight spot 500 when the sunlight beam passes through the gratings M, that is, the central area is the sun spot 500 with relatively strong brightness, and the surrounding area is the shadow with relatively weak brightness, thereby achieving an effect similar to a window shadow.

Optionally, the gratings M can have the same shape as the light guide member 220. Of course, the shape of the gratings M can also be designed according to practical requirement so that it has a different shape from the light guide member 220.

In a more specific embodiment, when the light guide member 220 is rectangular, after the blue light emitted by the blue light emitter 210 enters the light guide member 220, the light guide member 220 presents a light effect of blue sky in a rectangular area. Correspondingly, the gratings M is designed to be rectangular. In this case, the sunlight spot 500 transmitted by the sunlight emitted by the sunlight emitter 310 after passing through the optical element 320 is restricted by the rectangular gratings M to form the sun spot 500 in rectangular shape. On that basis, one can observe both the light effect of blue sky and the sun spot 500 with a circle of shadow, which can make people feel the effect similar to the sunlight shining through the window, thereby improving people's visual sense.

Based on the above configuration, in the embodiment of the present application, the blue light emitter 210 emits blue light to the light guide member 220 so that the light guide member 220 appears sky blue, thereby showing the light effect of blue sky; the sunlight emitter 310 emits blue light to the optical element 320 to form a sun spot 500, and the sun spot 500 is intercepted through the gratings M to obtain a predetermined shape of the sun spot 500. At the same time, when passing through the gratings M, the sunlight will form a shadow around the sun spot, which is similar to the window shadow produced by sunlight shining on a window. In this way, people can observe both the light effect of blue sky and the shadow effect of sunlight in the environment, so that the blue-sky effect under the contrast of the shadow effect can have increased sense of reality, thereby enhancing their visual enjoyment.

To realize the installation and protection of the first light-emitting component 200 and the second light-emitting component 300, the lamp in the embodiment of the present application further comprises a lamp body 100. The first light-emitting component 200 and the second light-emitting component 300 can be installed on the lamp body 100 to act a protective role.

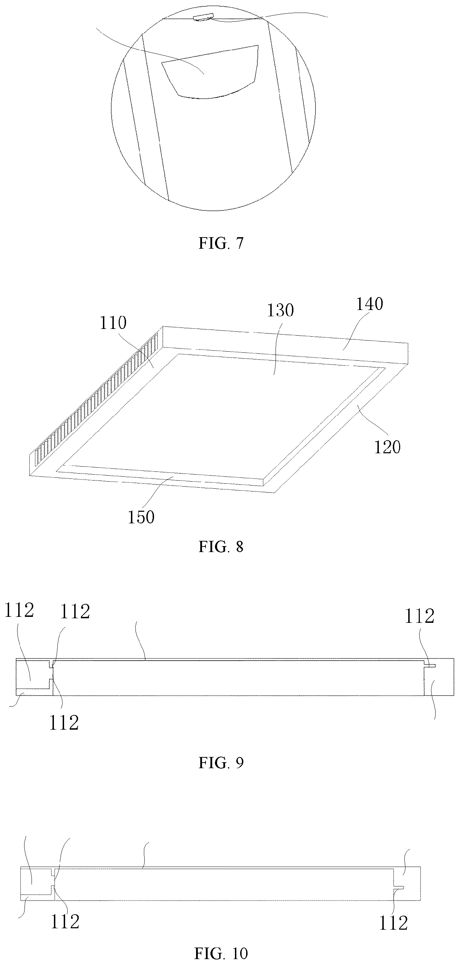

Referring to FIGS. 8 to 10, in some embodiments, the lamp body 100 comprises a first installation structure 110, a second installation structure 120, and a connection structure 130. By the connection structure 130, the first installation structure 110 and the second installation structure 120 can be connected together. Among them, the first light-emitting component 200 is disposed between the first installation structure 110 and the second installation structure 120. In this way, the first light-emitting component 200 can be installed via the first installation structure 110 and the second installation structure 120. The second light-emitting component 300 is disposed in the first installation structure 110. In this way, the second light-emitting component 300 can be installed via the first installation structure 110.

Optionally, the lamp body 100 can be designed as a shell structure. The first light-emitting component 200 and the second light-emitting component 300 can be disposed inside the lamp body 100, so that the lamp body 100 can provide a protection for the first light-emitting component 200 and the second light-emitting component to protect that the first light-emitting component 200 and the second light-emitting component 300 from damage caused by external factors, thereby extending the service life of the lamp.

Referring to FIGS. 4, 9, and 10, in some embodiments, a first groove 111 is disposed on a side of the first installation structure 110 towards the second installation structure 120, and a second groove 121 is disposed on a side of the second installation structure 120 towards the first installation structure 120. An opening of the first groove 111 can be directly opposite to an opening of the second groove 121, so that the first groove 111 and the second groove 121 can cooperate with each other to achieve the installation of the blue light emitter 210 and the light guide member 220.

During installation, a first end of the light guide member 220 is inserted into the first groove 111, and a second end of the light guide member 220 is inserted in the second groove 121. In this way, the light guide member 220 is fixedly installed via the first groove 111 and the second groove 121. Because the connection structure 130 connects the first installation structure 110 to the second installation structure 120, the light guide member 220 is spaced apart from the connection structure 130. Based on this, the connection structure 130 can be used as a background wall of the light guide member 220 to play a limiting effect on the blue light emitted by the light guide member 220. Optionally, a reflective layer can be further laid on a side of the connection structure 130 towards the light guide member 220 to play a reflective effect on the blue light emitted by the light guide member 220 so that the light guide member 220 exhibits brighter.

To install the blue light emitter 210, an end surface of a second end of the light guide member 220 is spaced apart from a bottom wall of the second groove 121, so that a receiving space is formed between the end surface of the second end and the bottom wall of the second groove 121 can be formed, and the blue light emitter 210 is disposed in the receiving space. In this way, the light guide member 220 and the side wall of the second groove 121 can provide a protection for the blue light emitter 210 to prevent the blue light emitter 210 from being damaged. At the same time, the blue light emitter 210 is opposite to the second end of the light guide member 220, and thus the blue light emitted by the blue light emitter 210 can be directly incident into the light guide member 220, so that the light guide member 220 emits a blue light.

Here, it is to be noted here that to facilitate the installation of the light guide member 220, at least one of the first groove 111 and the second groove 121 can have a larger depth. During the installation, one end of the light guide member 220 can be inserted into one groove, and then the other end of the light guide member 220 can be inserted into the other groove. In this way, it can provide a redundant space for the installation of the light guide member 220, which facilitates the installation of the light guide member 220.

In addition to the above installation method, the light guide member 220 can be slid into the first groove 111 and the second groove 121 along the length direction of the first groove 111 and the second groove 121 to achieve the installation.

To ensure a firm installation, the light guide member 220 and the blue light emitter 210 can also be fixed by gluing, fastening, or the like, to prevent the light guide member 220 and the blue light emitter 210 from loosening.

Referring to FIGS. 4, 9 and 10, in some embodiments, the first installation structure 110 is provided with a channel 112, within which the optical element 320 and the sunlight emitter 310 are disposed, respectively. In this way, the side wall of the channel 112 can provide a protection for the optical element 320 and the sunlight emitter 310 from being damaged.

To enable the sunlight emitted by the sunlight emitter 310 to be emitted, the channel 112 is provided with a through hole 113 in its side wall, and the opening of the through hole 113 faces the second installation structure 120. In this way, the sunlight emitted by the sunlight emitter 310 can pass through the optical element 320 and the through hole 113 sequentially, and is emitted from the channel 112 in the direction towards the second installation structure 120 to facilitate the formation of the sun spot 500.

Optionally, the through hole 113 can have a circular, rectangular, triangular, hexagonal shape, or the like, which is not specifically limited in the embodiments of the present application, but can be particularly selected according to practical requirement.

It is to be noted here that the sunlight emitted by the sunlight emitter 310 is emitted from the first installation structure 110 towards the second installation structure 120 through the through hole 113, and thus a sunlight beam can be formed between the first installation structure 110 and the second installation structure 120. The light guide member 220 is located between the first installation structure 110 and the second installation structure 120, so that the light guide member 220 can form a blue light between the first installation structure 110 and the second installation structure 120. In this way, the sunlight beam and the blue light at least partially superposed so that the observed light effect of blue sky are brighter, which enhances the light effect of blue sky to a certain extent.

To enhance the light effect of the lamp, the first light-emitting component 200 can comprise a plurality of blue light emitters 210, which are disposed at intervals in the second groove 121, and opposite to the second end of the light guide member 220, respectively, so that the plurality of blue light emitters 210 can emit blue light to the light guide member 220 at the same time, thereby enhancing the light effect of blue sky.

Of course, the second lighting component 300 can also comprise a plurality of sunlight light-emitting emitters 310 which can be disposed in the channel 112 of the first installation structure 110 to emit sunlight at the same time. Correspondingly, the second light-emitting component 300 further comprises a plurality of optical elements 320 corresponding to the plurality of sunlight emitters 310 one by one, so that the sunlight emitted by the plurality of sunlight emitters 310 can be transmitted by the plurality of optical elements 320.

Referring to FIG. 3, FIG. 6, and FIG. 8, in some embodiments, the first installation structure 110 is provided with a plurality of channels 112 arranged sequentially along the first direction. Because multiple sets of the sunlight emitters 310 and the optical elements 320 are provided in one-to-one correspondence, one set of the sunlight emitter 310 and the optical element 320 corresponding to each other are disposed in each channel 112 during the installation so that each channel 112 can receive one set of the sunlight emitter 310 and the optical elements 320 corresponding to each other and can also provide a protection. It can be understood that the above-mentioned first direction is perpendicular to the arrangement directions of the first installation structure 110 and the second installation structure 120, as well as the normal direction of the connection structure 130, respectively. That is, as shown in FIGS. 3 and 6, the first direction is a direction from left to right, or from right to left.

To enable the sunlight beam to be emitted, each channel 112 is provided with a through hole 113 in its side wall. In this case, the sunlight beam can be emitted outwards from the through hole 113 of each channel 112. In this way, the through holes 113 of the multiple channels 112 form a gratings M. When the sunlight beam passes through the gratings M, it is intercepted by the gratings M to form into a predetermined shape, so that the sun spot 500 can have a shape consistent with the area with the light effect of blue sky to produce a window shadow-like effect, thereby increasing the sense of reality of the light effect of blue sky.

Referring to FIG. 6, in some embodiments, the lamp body 100 has an intermediate plane N at a middle position along the first direction. The channel 112 at the position of the intermediate plane N extends in a direction parallel to the intermediate plane N, so that the sunlight beam passing through this channel 112 can be emitted along the intermediate plane N. Along the first direction, the multiple channels 112 located on either side of the intermediate plane N extend in directions at angle to the intermediate plane N, and the angles are acute so that the sunlight beams passing through the individual channels 112 can be inclined towards the intermediate plane N. In this way, the sunlight beams passing through the individual channels 112 can converge towards the intermediate plane N, so that the formed sunlight spot is brighter.

Optionally, along the first direction, the angles between the extension directions of various channels 112 on either side of the intermediate plane N and the intermediate plane N are different. Specifically, in a direction from the outermost side of the lamp body 100 to the intermediate plane N, the angles between the extension directions of the various channels 112 and the intermediate plane N decreases gradually.

Referring to a) in FIG. 12, the angel between the extension direction of the channel 112 which is the farthest (i.e., the outermost) from the intermediate plane N and the intermediate plane N is 14°, the angle between the extension direction of the channel 112 which is the second farther from the intermediate plane N and the intermediate plane N is 13.21°, the angle between the extension direction of the channel 112 which is the third farther from the intermediate plane N and the intermediate plane N is 12.41°, the angle between the extension direction of the channel 112 which is the fourth farther from the intermediate plane N and the intermediate plane N is 11.60°, the angle between the extension direction of the channel 112 which is the fifth farther from the intermediate plane N and the intermediate plane N is 10.79°, the angle between the extension direction of the channel 112 which is the sixth farther from the intermediate plane N and the intermediate plane N is 9.98°, the angle between the extension direction of the channel 112 which is the seventh farther from the intermediate plane N and the intermediate plane N is 9.16°, the angle between the extension direction of the channel 112 which is the eighth farther from the intermediate plane N and the intermediate plane N is 8.34°... and the angle between the extension direction of the channel 112 which is the nearest to the intermediate plane N and the intermediate plane N is 0°. Based on the above configuration, it can produce an effect of gradual convergence of sunlight beams in the first direction to obtain brighter and more realistic sunlight spots.

To form the multiple channels 112, in the embodiment of the present application, the first installation structure 110 comprises a first plate 114 and a second plate 115 spaced apart in the second direction, and a plurality of partitions 116 spaced apart in the first direction, and each partition 116 is connected to the first plate 114 and the second plate 115, so that the plurality of partitions 116 are connected at intervals between the first plate 114 and the second plate 115, respectively. In this way, two adjacent partitions 116 and the first plate 114 and the second plate 115 together form a channel 112 in which the sunlight emitter 310 and optical element 320 correspondingly disposed are received. The above-mentioned second direction is the normal direction of the connection structure 130. As shown in FIG. 3, the second direction is vertically upwards or downwards.

Optionally, the first plate 114, the second plate 115, and the plurality of partitions 116 can be integrally formed. Of course, the plurality of partitions 116 can also be fixed between the first plate 114 and the second plate 115, e.g., by bonding, welding, screwing, riveting, etc.

To change the irradiation direction of the sunlight beam, part of the partitions 116 can be arranged at an angle. As shown in FIG. 6, the partitions 116 located on the left side of the intermediate plane N are tilted to the right from top to bottom, and the part of the partitions 116 located on the right side are tilted to the left from top to bottom. The partition 116 located at the intermediate plane N is upright and not is tilted. In this way, the sunlight beams emitted from the channels 112 located on the left side of the intermediate plane N will be inclined towards the right, and the sunlight beams emitted from some channels 112 located on the right side of the intermediate plane N will be inclined towards the left, so that the sunlight beams will converge towards the middle to reduce the size of the sun spot 500, which can increase the brightness of the sun spot 500 to a some extent.

Here, it is to be noted that some neighboring partitions 116 on either side of the intermediate plane N may not be inclined, which can make the central area of the sun spot brighter.

In the embodiments of the present application, the first end of the light guide member 220 is disposed in the first installation structure 110, and the second end of the light guide member 220 is disposed in the second installation structure 120, specially, the first end of the light guide member 220 is disposed in the first groove 111 of the first installation structure 110, and the second end of the light guide member 220 is disposed in the second groove 121 of the second installation structure 120. In this way, the light guide member 220 is disposed opposite to the connection structure 130, and a gap is formed between the light guide member 220 and the connection structure 130 when they are spaced apart from each other.

Based on the above configuration, the light guide member 220 can be disposed in various forms, specifically comprising the following forms.

Form 1: Referring to FIGS. 4, 9, and 13, the light guide member 220 and the connection structure 130 are located on the same side of the through hole 113, while the through hole 113 is located on the side of the light guide member 220 away from the connection structure 130. In this way, the inclining direction of the sunlight beam emitted through the through hole 113 goes away from the light guide member 220, so that the sunlight beam would not shine onto the light guide member 220. In this way, the sunlight beam and the blue light can be superimposed below the light guide member 220, thereby increasing the sense of reality by mapping the sunlight beam and the blue light to each other.

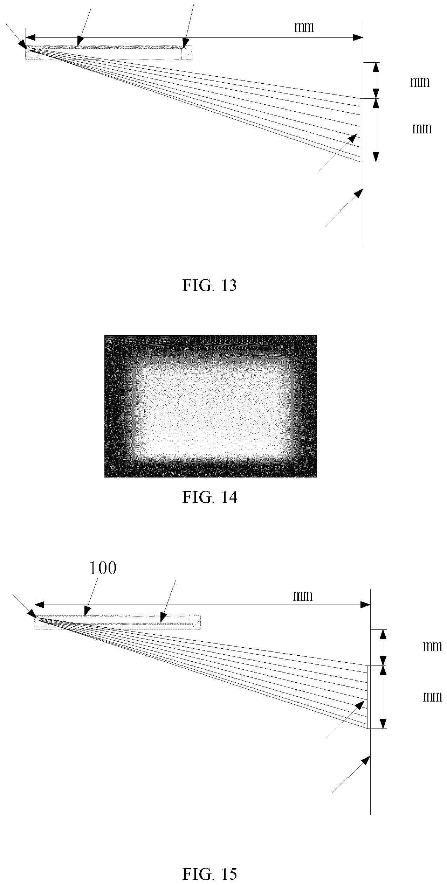

Optionally, with reference to FIGS. 13 and 14, the distance between the left end surface of the lamp (i.e., the end surface ear the sunlight emitter 310) and the panel or wall 400 is set as 2,000 mm. In this case, the sunlight beam emitted through the through hole 113 shines onto the panel or wall 400 after passing through the gratings M, and can form a rectangular sun spot. The distance between the top of the rectangular sun spot and the bottom end surface of the lamp is 100 mm. The rectangular sun spot has a width of 1200 and a height of 600 mm, and a shadow is formed in the area around the rectangular sun spot.

Form 2: Referring to FIGS. 4, 10 and 15, the light guide member 220 and the connection structure 130 are located on opposite sides of the through hole 113. In this case, the through hole 113 is located between the light guide member 220 and the connection structure 130. In this way, the sunlight beam emitted through the through hole 113 is inclined in a direction towards the light guide member 220, so that the sunlight beam shines on the light guide member 220. In this way, some sunlight beam and the blue light can be superimposed above the light guide member 220, and other sunlight beams enter the light guide member 220, which increase the lighting intensity of the light guide member 220 to make the effect of blue sky brighter, thereby making the light effect of blue sky deeper and enhancing the blue sky and sunlight atmosphere.

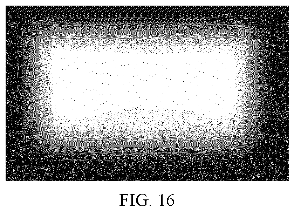

Optionally, with reference to FIGS. 15 and 16, the distance between the left end surface of the lamp (i.e., the end surface near the sunlight emitter 310) and the panel or wall 400 is set as 2,000 mm. In this case, the sunlight beams emitted through the through hole 113 shine onto the panel or wall 400 after passing through the gratings M, and can form a rectangular sun spot. The distance between the top of the rectangular sun spot and the bottom end surface of the lamp is 250 mm. The rectangular sun spot has a width of 1200mm and a height of 750 mm, and a shadow is formed in the area around the rectangular sun spot.

Based on the above configuration, both methods can form a sun spot 500 with a light effect of blue sky and a predetermined shape, and the size and position of the sun spot 500 can be determined according to the actual situation by adjusting the angle of the optical element 320 and the distance of the lamp relative to the panel or wall 400, the shape of the sun spot 500 can be determined according to the shape of the gratings M; in addition, both methods can achieve the combination of blue sky and sunlight, thereby allowing people to release stress, feel happy, and play a positive role in people's physical and mental health.

To adjust the emission angle of the sunlight beam, in the embodiment of the present application, the optical element 320 is rotatably disposed in the channel 112 to adjust the direction of the optical axis of the optical element 320. Optionally, the optical element 320 can be limited by a pivot or an arc-shaped groove, so that the optical element 320 can rotate relative to the first installation structure 110 to change the optical axis direction of the optical element 320. Based on the above configuration, when the sunlight emitted by the sunlight emitter 310 enters the optical element 320, the emission direction of the sunlight beam can be changed by changing the optical axis direction of the optical element 320 to adjust the position of the sunlight spot 500, so that the relative position between the sunlight spot 500 and the area with the light effect of blue sky can be adjusted, thereby achieving the best observation effect and giving people a more realistic feeling.

Optionally, the light guide member 220 can be a plate, such as a light guide plate. In a more specific embodiment, the light guide member 220 can be a microparticle light guide plate. Of course, the embodiments of the present application do not restrict the specific structure of the light guide member 220 particularly, as long as it meets the practical requirement.

Optionally, the optical element 320 can be a lens structure. In a more specific embodiment, the optical element 320 can be a plano-convex lens. In this case, the convex surface of the plano-convex lens faces the through hole 113, and the planar surface faces the sunlight emitter 310, so that the sunlight beam can be transmitted through the optical element 320.

Here, it is to be noted that the sunlight beam transmitted by the plano-convex lens can form a circular sunlight spot 500 when the sunlight beam shines on the panel or wall 400. To meet the practical requirement, it make the sunlight beam passing through the rectangular gratings M to form a rectangular sunlight spot, thereby making the light spot consistent with the area with the light effect of blue sky to improve sense of reality.

Referring to FIGS. 1 and 8, in some embodiments, the lamp body 100 can further comprise a first barrier 140 and a second barrier 150, the first barrier 140 and the second barrier 150 are each disposed at either edge of the connection structure 130 in the first direction, respectively. In this way, the first barrier 140, the second barrier 150, the first installation structure 110, and the second installation structure 120 together form a concave space, and the light guide member 220 is at least partially located in the concave space. The above-mentioned first direction is perpendicular to the arrangement directions of the first installation structure 110 and the second installation structure 120 and the connection structure 130, respectively.

Based on the above configuration, the first barrier 140, the second barrier 150, the first installation structure 110, and the second installation structure 120 together surround the light guide member 220, thereby providing a protection for the light guide member 220. At the same time, they can also form a preset-shaped area with the light effect of blue sky. In addition, providing the first barrier 140 and the second barrier 150 can also enhance the strength of the lamp body 100.

To sum up, the lamps in the embodiments of the present application can form an effect of blue sky and form a sun spot 500, and a shadow can be formed around the sun spot 500 to achieve an effect similar to a window shadow, which enhances the reality of the effect of blue sky to some extent. Based on this, it can simulate effect of blue sky, sunlight, and window shadow in the case that people indoors cannot see the sky, allowing people to release stress and feel happy, which plays a positive role in physical and mental health.

Hereinbefore, the embodiments of the present application are described with reference to the accompanying drawings, but the present application is not limited to the above-mentioned specific embodiments. The above-mentioned specific embodiments are only illustrative, rather than restrictive. By the inspiration of the present application, one of ordinary skill in the art can also make many forms without departing from the spirit of the present application and the scope of the claims, all of which fall within the scope of the present application.

## Claims

1. A lamp comprising:
a first light-emitting component (200) comprising a blue light emitter (210) and a light guide member (220), wherein the blue light emitter (210) is disposed adjacent to the light guide member (220) so that a blue light emitted by the blue light emitter (210) enters the light guide member (220) to display a light effect of blue sky;
a second light-emitting component (300) comprising a sunlight light-emitter (310) and an optical element (320), wherein the sunlight light-emitter (310) is disposed adjacent to the optical element (320) so that a sunlight emitted by the sunlight-emitter (310) is transmitted through the optical element (320) to form a sunlight spot;
a gratings (M) disposed on a side of the optical element (320) away from the sunlight-emitter (310), and configured to intercept the sunlight spot to form a sunlight spot with a predetermined shape.

2. The lamp according to claim 1, further comprising a lamp body (100) comprising a first installation structure (110), a second installation structure (120), and a connection structure (130) connecting the first installation structure (110) and the second installation structure (120);
wherein the first light-emitting component (200) is disposed between the first installation structure (110) and the second installation structure (120), and the second light-emitting component (300) is disposed in the first installation structure (110).

3. The lamp according to claim 2, wherein a first groove (111) is disposed on a side of the first installation structure (110) towards the second installation structure (120), a second groove (121) is disposed on a side of the second installation structure (120) towards the first installation structure (110), a first end of the light guide member (220) is disposed in the first groove (111), a second end of the light guide member (220) is disposed in the second groove (121), and the light guide member (220) is spaced apart from the connection structure (130); and
an end surface of the second end and a bottom wall of the second groove (121) are spaced apart from each other and form a receiving space in which the blue light emitter (210) is disposed.

4. The lamp according to claim 2, wherein the first installation structure (110) is provided with a channel (112), both the optical element (320) and the sunlight emitter (310) are disposed in the channel (112); and
a side wall of the channel (112) is provided with a through hole (113) facing the second installation structure (120), through which a sunlight beam transmitted by the optical element (320) is emitted out.

5. The lamp according to claim 4, wherein the first installation structure (110) is provided with a plurality of the channels (112) arranged in the first direction, and the side wall of each channel (112) is provided with the through hole (113), a plurality of the through holes (113) form a gratings (M), and the first direction is perpendicular to an arrangement direction of the first installation structure (110) and the second installation structure (120) and the normal direction of the connection structure (130), respectively; and
the second light-emitting component (300) comprises multiple sets of the sunlight emitters (310) and the optical elements (320) correspondingly disposed, the multiple sets of the sunlight emitters (310) and the optical elements (320) are disposed in the multiple channels (112) in one-to-one correspondence.

6. The lamp according to claim 5, wherein the lamp body (100) has an intermediate plane (N) at a middle position along the first direction, and the channel (112) located at the intermediate plane (N) extends in a direction parallel to the intermediate plane (N), so that the sunlight beam is emitted along the intermediate plane N; and
along the first direction, the multiple channels (112) located on either side of the intermediate plane (N) extend in directions at angles to the intermediate plane (N), wherein the angles are acute angle so that the sunlight beams are inclined towards the intermediate planes (N).

7. The lamp according to claim 6, wherein, along the first direction, the angles between the extension directions of a plurality of the channels (112) on either side of the intermediate plane (N) and the intermediate plane (N) are different.

8. The lamp according to claim 4 or 5, wherein a first end of the light guide member (220) is disposed in the first installation structure (110), a second end of the light guide member (220) is disposed in the second installation structure (120), and a gap is formed between the light guide member (220) and the connection structure (130); and
the through hole (113) is located on a side of the light guide member (220) away from the connection structure (130), or the through hole (113) is located in the gap between the light guide member (220) and the connection structure (130).

9. The lamp according to claim 4, wherein the optical element (320) is rotatably disposed in the channel (112) to adjust a direction of an optical axis of the optical element (320).

10. The lamp according to claim 1, wherein the light guide member (220) is a microparticle light guide plate; and/or,
the optical element (320) is a plano-convex lens.
